# EUROPEAN PATENT SPECIFICATION

(11) **EP 3 501 807 B1**
(45) Date of publication and mention of the grant of the patent: **25.11.2020**
(21) Application number: 18212741.5
(22) Date of filing: 14.12.2018
(51) Int. Cl.: B29D 30/30, B29D 30/60, B29D 30/62, B29D 30/00, B29D 30/02

(54) **METHOD AND APPARATUS FOR FORMING RUBBER REINFORCED COMPONENT**
VERFAHREN UND VORRICHTUNG ZUR HERSTELLUNG EINER GUMMIVERSTÄRKTEN KOMPONENTE
PROCÉDÉ ET APPAREIL DE FORMATION D'UN COMPOSANT RENFORCÉ PAR CAOUTCHOUC

(30) Priority: 19.12.2017 US 201715846822
(43) Date of publication of application: 26.06.2019
(73) Proprietor: The Goodyear Tire & Rubber Company, Akron, OH 44316 (US)
(72) Inventor: BENZING, James Alfred, II, North Canton, OH 44720 (US)
(74) Representative: Kutsch, Bernd

(56) References cited:
- EP-A2- 1 479 509
- WO-A1-2017/116822
- US-A1- 2005 051 256

## Description

### Field of the Invention

The invention relates generally to rubber processing, and more particularly to a method and apparatus for forming a rubber component such as a tread, shear band or other rubber component with reinforcements.

### Background of the Invention

The invention describes a method and apparatus capable of making a rubber component that is reinforced with metal or nonmetal reinforcements. The rubber component may be for example a belt and tread ring assembly or a shear band and tread assembly for a non-pneumatic tire. Typical prior art methods generally utilize expensive equipment such as gear pumps and extruders in order to form a strip of rubber for strip lamination of components. Extruders are typically very high pressure and require large amounts of horsepower in order to form a small strip. Extruders are expensive, and if not used properly, may overheat or overwork the rubber. Thus, an apparatus and method of efficiently producing reinforced rubber component is desired.

US-A- 2005/0051256 describes an apparatus in accordance with the preamble of claim 1.

### Summary of the Invention

The invention relates to an apparatus in accordance with claim 1, and to a method in accordance with claim 7.

Dependent claims refer to preferred embodiments of the invention.

One or more embodiments of the present invention provide an apparatus for forming a reinforced rubber component, the apparatus comprising a support frame, a rotatable drum mounted upon the support frame, a rubber strip forming apparatus mounted in close proximity to the rotatable drum for applying a rubber strip onto the rotatable drum, and a reinforcement applier apparatus for applying a reinforcement onto the rotatable drum.

Preferably, an upper end of the rubber strip forming apparatus is mounted on a rail and capable of translating in a direction parallel to a rotational axis of the rotatable drum and/or an upper end of the reinforcement applier apparatus is mounted on a rail and capable of translating in a direction parallel to a rotational axis of the rotatable drum.

Preferably, the reinforcement applier apparatus and the rubber strip forming apparatus are located adjacent each other.

The angle of the reinforcement applier apparatus with the vertical axis is adjustable and/or the angle of the strip forming apparatus with the vertical axis is adjustable.

In a preferred aspect of the invention, the strip forming apparatus comprises a support frame, a first and second roller mounted on the support frame, wherein the first and second rollers are spaced apart from each other, and an application roller located adjacent a milltruder head, and a channel formed in the space between the head and the outer surface of the application roller and the inner surface of the milltruder head; wherein said channel has an inlet and an outlet, wherein the inlet is located near the second roller, and the outlet is located adjacent a die.

In a preferred aspect of the invention, the support frame is rotatable.

In a preferred aspect of the invention, the support frame is translatable in a direction parallel to the rotational axis of the rotatable drum.

One or more embodiments of the present invention provide a method of forming a reinforced rubber component, the method comprising the steps of providing a rotatable drum, applying a rubber strip onto the rotatable drum to form a first rubber layer in a first direction, applying a reinforcement over the first rubber layer in a second direction opposite the first direction to form a first reinforcement layer, and applying a rubber strip over the first reinforcement layer.

The rubber strip and the reinforcement is spirally wound on the rotating drum.

In a preferred aspect of the invention, the reinforcement and the rubber strip is applied on the rotatable drum at the same time.

In a preferred aspect of the invention, the reinforcement applier and the rubber strip applier are located adjacent each other.

In a preferred aspect of the invention, the reinforced rubber component is a shear band or a belt and tread assembly.

One or more embodiments of the present invention provides a method of forming a spliceless tread ring, the method comprising the steps of providing a rotatable drum, applying a rubber strip onto the rotatable drum to form at least three rubber layers, wherein the strip is spirally wound on the rotatable drum to form a green tread ring, and inserting the green tread ring in a mold and curing the tread ring.

One or more embodiments of the present invention provides a method of forming a tire, the method comprising the steps of providing a tire carcass and mounting it on a rotatable drum, applying a rubber strip onto the tire carcass to form at least three rubber layers, wherein the strip is spirally wound to form a green tread ring, and curing the green tread ring and the tire carcass in a mold.

### Brief Description of the Drawings

The invention will be described by way of example and with reference to the accompanying drawings in which:
Figure 1 is a front perspective view of a strip forming apparatus of the present invention;
Figure 2 is a closeup view of the strip forming apparatus of Figure 1 shown with only half of the application roller for clarity;
Figure 3 is a front view of the applicator wheel of Figure 2;
Figure 4 is a front perspective view of the strip forming apparatus illustrating the path of the rubber;
Figures 5 and 6 are a side views of a second embodiment of a milltruder head and the application roller from different angles;
Figure 7 is a bottom view of the milltruder head of Figure 5;
Figure 8 is a front view of a reinforced rubber component making apparatus of the present invention;
Figure 9 is a front view of a wire applicator apparatus of the present invention;
Figure 10 is a front close up view of the wire applicator apparatus of Figure 9;
Figure 11 is a front view of a mold;
Figures 12a through 12e are schematics illustrating the steps for forming a reinforced rubber component.

### Detailed Description of Example Embodiments of the Invention

The invention as described herein provides a method and apparatus for forming reinforced rubber components. The reinforced rubber components may include for example, a belt and tread structure useful for a pneumatic tire, or, in another example, a shear band useful for a non-pneumatic tire.

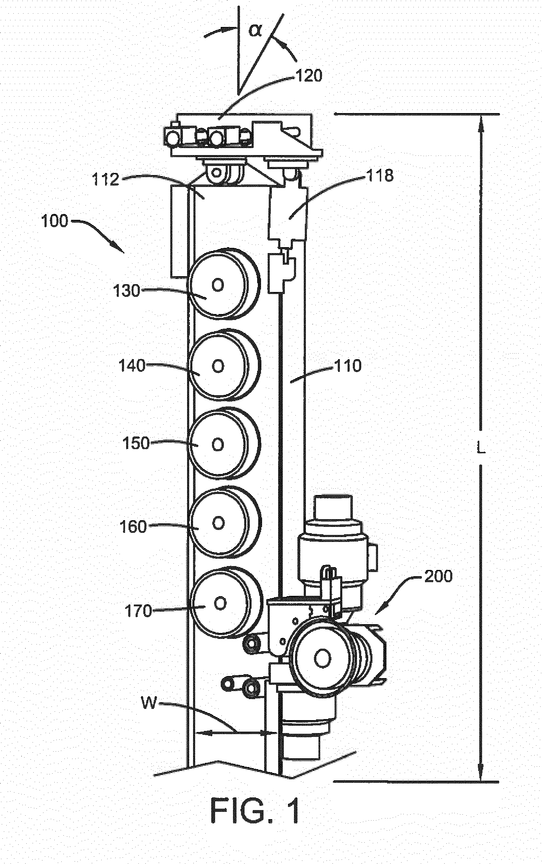

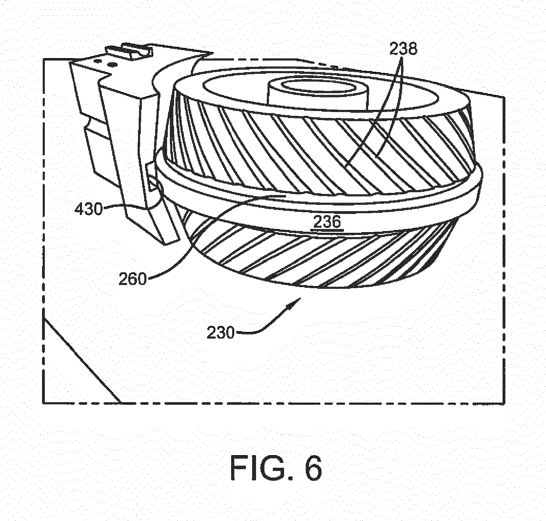

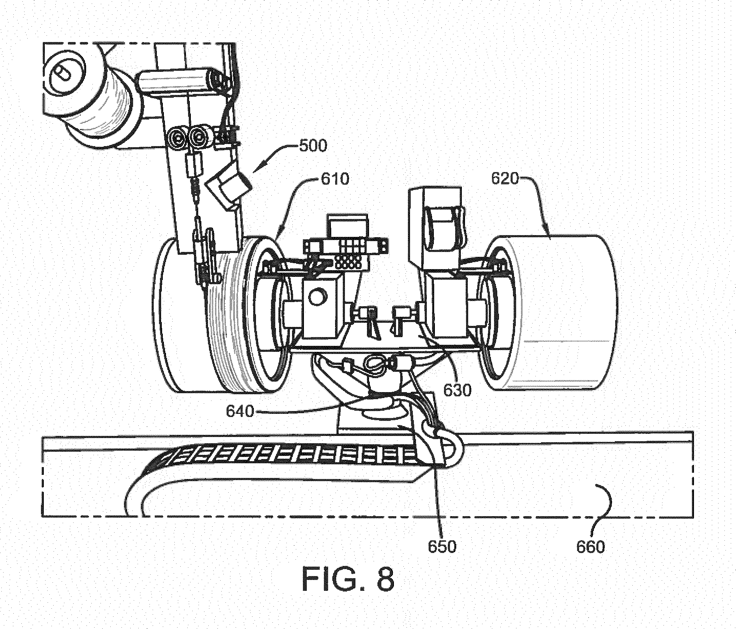

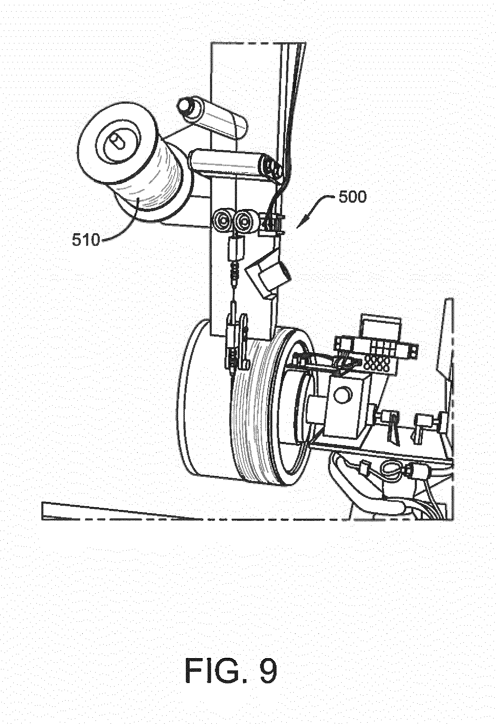

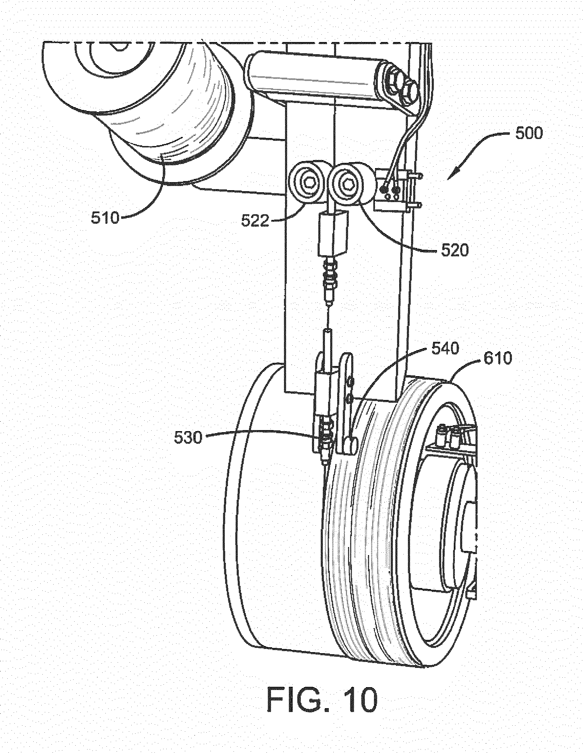

The invention includes a strip forming apparatus 100 as shown in Figures 1-7 and described in more detail, below. The invention further includes a wire applicator apparatus 500 as reinforcement applier apparatus as shown in Figures 8-10 and described in more detail, below.

The strip forming apparatus 100 and wire applicator 500 may be used in conjunction with drum system 600, shown in Figure 8. The drum system 600 preferably includes a first and second drum 610, 620. The first and second drum 610, 620 are mounted on a support frame 630 which is preferably rotatably mounted on column 640. The support frame 630 preferably can rotate at least 180 degrees on column 640. The column 640 is preferably mounted to lower support frame 650 which can slide on rails 660. The first and second drums 610, 620 can preferably slide on rails 660 to a mold ring apparatus 700. Preferably, there are two mold ring apparati 700.

### Strip Forming Apparatus

Referring to FIG. 1, a strip forming apparatus 100 is shown. The strip forming apparatus 100 includes a mounting frame 110 that is preferably rectangular in shape, with a significantly longer vertical length than width. The mounting frame 110 has an upper end 112 that is preferably pivotally mounted to a servomechanism 120. The servomechanism 120 functions to traverse the mounting frame forward and aft. The mounting frame 110 preferably hangs vertically on the servomechanism allowing the stitching pressure to be adjusted by the traverse position. The angle α that the strip forming apparatus makes with the vertical direction may preferably be adjusted by a servo mechanism 118. In order to adjust the stitching pressure, the angle α of the strip forming apparatus is varied. Variation of the angle changes the stitching pressure. Very low stitching pressure can be achieved which is required for small rubber strips. The stitching pressure can be adjusted by the traverse position of the strip forming apparatus in relation to a tire building drum, as described in more detail below.

As shown in Figure 1, the mounting frame 110 has a length L and a width W, wherein the length L is preferably aligned with the vertical direction. The length/width ratio is preferably greater than 10. The mounting frame 110 has a plurality (at least two) of spaced apart preheat rollers 130, 140, 150, 160, 170 that are positionally fixed and rotatably mounted on the frame. The preheat rollers 130-170 are preferably aligned in the vertical direction so that the centers of each roller are preferably in a straight line. Each roller is spaced apart from an adjacent roller in the range of 25.4 mm to 127 mm. The rollers are not calendaring the rubber, as they are spaced apart. Calendering involves forming a shape between two rollers.

Each preheat roller preferably has internal heaters (not shown). Preferably, each preheat roller is heated to a different temperature than the other preheat rollers. Preferably, the preheat rollers are progressively heated to a higher temperature so that the first preheat roller 130 is the coolest roller, while the second preheat roller 140 is heated to a higher temperature than the first preheat roller 130. The third preheat roller 150 is heated to a higher temperature than the second preheat roller 140, and the fourth preheat roller 160 is heated to a higher temperature than the third preheat roller 150. Likewise, the fifth preheat roller 170 is heated to a higher temperature than the fourth preheat roller 160. In summary, the preheat rollers are preferably maintained at progressively higher temperatures, increasing in temperature in the incremental range of from 5-20 degrees per roller with decreasing height of the mounting frame, so that the first or highest roller 130 is the coolest and the lowest roller is the hottest.

It is also preferred that the preheat rollers progressively increase in rotational speed from the highest vertical roller 130 to the lowest vertical roller 170, so that the lowest vertical roller 170 is the fastest.

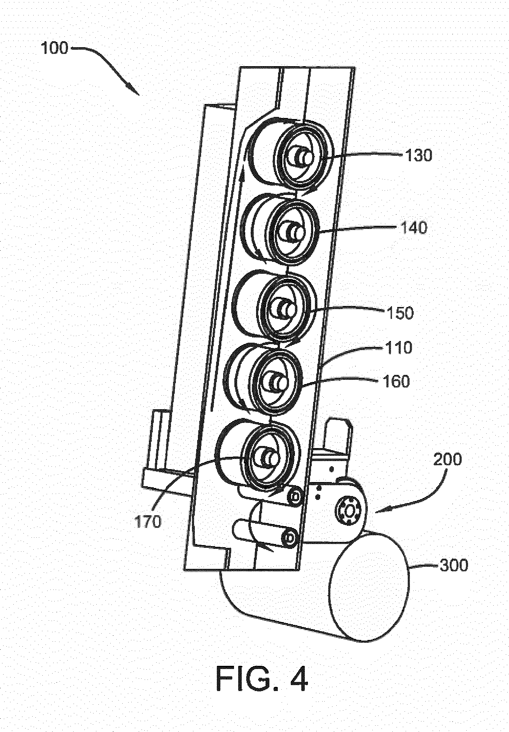

The rubber strip path is wound around the preheat rollers as shown in Figure 4. As the rubber strip is wound around the preheat rollers, the increase in roller speed and temperature results in the strip being stretched and thinned to a strip having the desired width and thickness. In a first example, the series of vertically oriented preheat rollers 130, 140, 150, 160, 170 process rubber stock having a 101.6 mm width, 6.35 mm thickness into a 76.2 mm wide, 3.175 mm thick strip of rubber. However, the rubber stock could be basically any size. The strip formed from the strip forming apparatus may be as narrow as 3.175 mm and wider and is not limited in size. Typically, the strips are in the range of 7.62 mm 50.8 m for tire building applications.

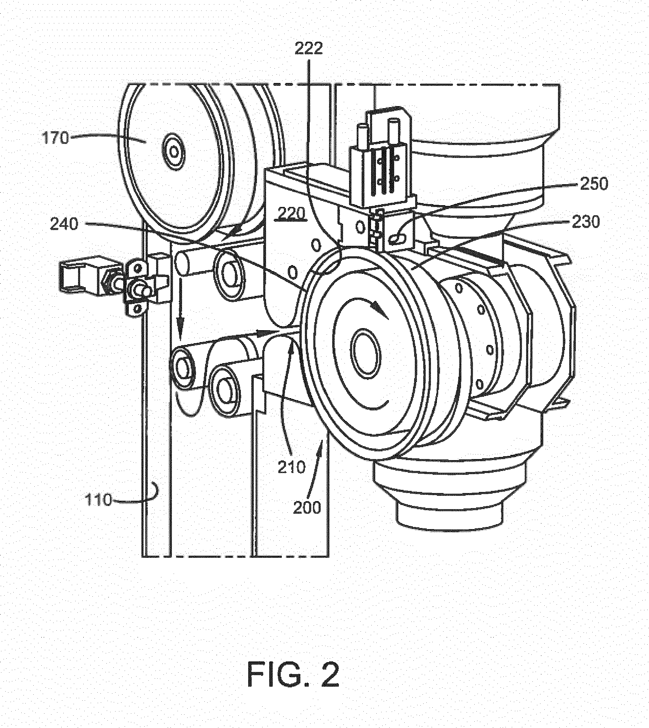

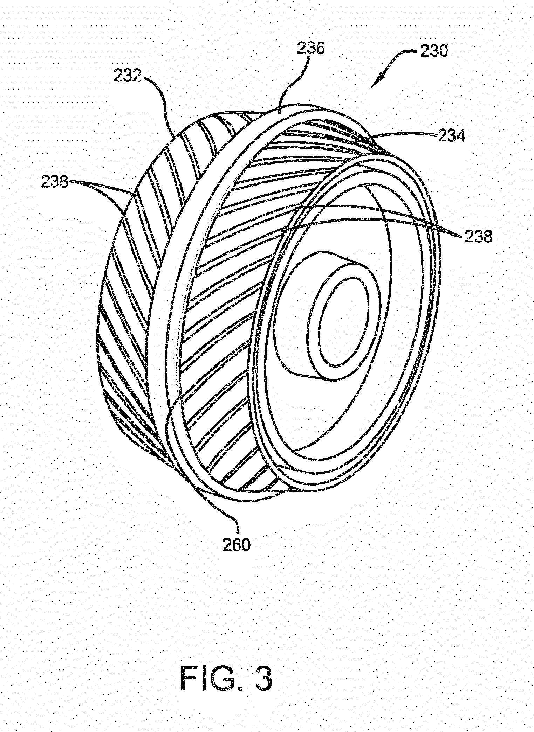

Figure 2 illustrates the path of the rubber strip after exiting the series of vertically oriented preheat rollers 130-170. The rubber strip is fed into the opening 210 of a milltruder 200. The milltruder includes a milltruder head 220 and an application forming roller 230. A channel 240 is formed between the milltruder head 220 and the forming roller 230. Figure 2 only illustrates half of the forming roller 230 for clarity, while Figure 3 illustrates the entire forming roller 230. The channel 240 preferably decreases in area from the inlet to the outlet adjacent a die 250. The rubber is fed into the opening of the channel into engagement with the rotating forming roller and the lower end 222 of the head 220. Preferably, the milltruder head 220 is heated.

Figure 3 illustrates the application forming roller 230. The application forming roller 230 preferably comprises a first conical half 232 and a second conical half 234 separated by a central band 236. The conical halves 232, 234 are preferably arranged so that the largest diameter is adjacent the band 236, while the smallest diameter is axially outward of the band 236. The application roller 230 may optionally comprise a plurality of grooves or serrations 238. The grooves or serrations 238 will increase pressure in die area which will increase output. The application roller 230 may optionally comprise a radial groove 260. The radial groove 260 is used to increase the quality of the edge of the strip. Once rubber fills the groove 260, it will flow the full 360 degrees back to the head. This action will pull any flash away from the rubber strip being applied to a tire building drum leading to a higher quality product.

As the application roller 230 rotates, it pulls rubber between the roller 230 and the milltruder head 220. As the rubber moves toward a die 250, the rubber is compressed and mixed both circumferentially and axially in the channel 240 between the milltruder head 220 and application forming roller 230. The axial mixing/movement is also increased due to the conical shape of the application roller. Since the outer diameter of the roller has a higher surface speed than the smaller diameter of the cone, rubber will tend to migrate to the surfaces with higher surface velocities, ie towards the band 236, generating additional mixing and pressure at the die opening. If more work or heat is required to process the rubber, the die 250 can be moved out to allow rubber to form a band around the application roller similar to a mill. This will allow multiple "passes" of rubber between milltruder head and roller, thus increasing work input.

The strip forming apparatus 100 may apply a strip of rubber onto a drum 300 or onto a carcass under construction. The application pressure may be adjusted by adjusting the angle α that the apparatus forms with the vertical direction.

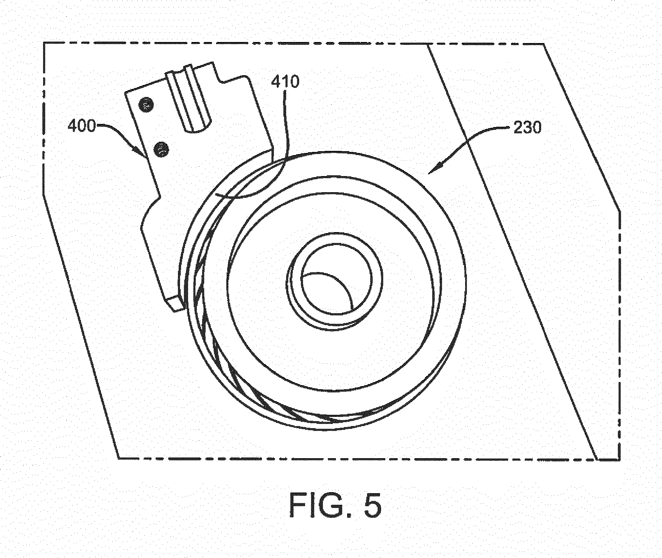

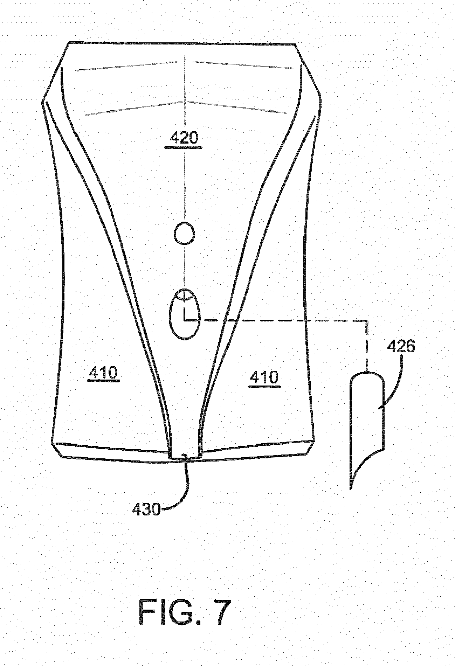

An alternate embodiment of a milltruder head 400 is shown in Figures 5-7. As shown in Figure 7, the milltruder head 400 has a lower surface 410 having a curved surface. The lower surface 410 has a hole for receiving a pin 426 therein. The pin 426 preferably has a beveled upper surface that protrudes from the lower surface 410 of the head. The curved lower surface has a V shaped groove 420 with the narrow portion of the V terminating in a die outlet 430. The die outlet 430 is positioned adjacent the band 236.

### Reinforcement Applicator Apparatus

The reinforcement applicator apparatus 500 is shown in Figures 8-10. The reinforcement applicator apparatus 500 is useful to apply reinforcements such as metal wire, nylon or aramid reinforcements. Reinforcement is fed from a spool 510 through opposed rollers 520, 522 to applicator head 530. Located adjacent the applicator head 530 is stitcher roller 540 for pressing the reinforcement into the rubber surface upon which the reinforcements are applied. The applicator head 530 is mounted on housing. The angle of the housing with the vertical axis may be adjusted to vary the application pressure of the reinforcement onto the drum.

### Mold Apparatus

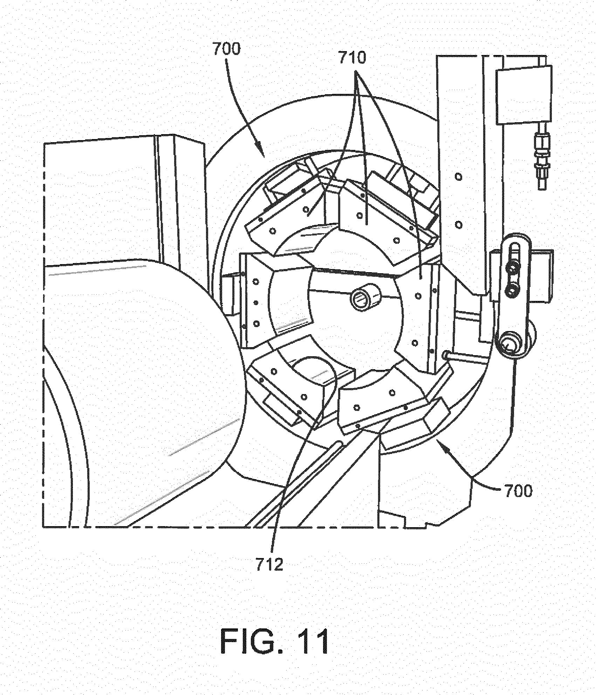

The mold apparatus 700 is shown in Figure 11. The mold apparatus 700 includes a plurality of segments 710 which can be arranged to form a ring about a drum 610, 620. The segments have an inner face 712 with desired tread pattern. The segments are capable of being heated to desired temperature in order to cure the rubber component.

### Method of Forming a Shearband

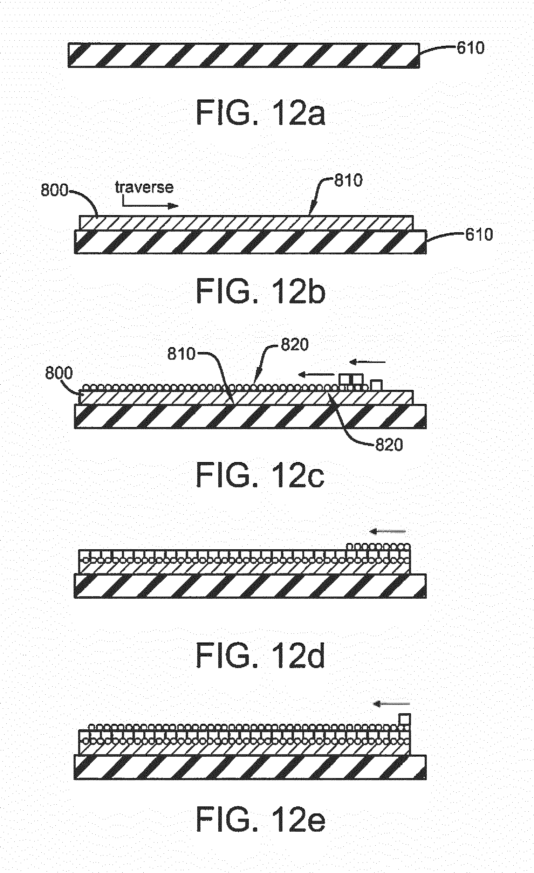

A method of forming a shearband onto a drum 610 is illustrated in Figures 12a through 12e. As shown in Figure 12b, a first step to form a shearband is to use the strip forming apparatus 100 to apply a continuous strip 800 of rubber onto the drum 610 to form a first rubber layer 810. Preferably, the layer is formed by spirally winding the continuous strip 800 about the drum 610. The direction of traverse in this example is from left to right. Next in a second step, the reinforcement applicator 500 is used to apply a first reinforcement layer 820 over the first rubber layer 810 by traversing the reinforcement applicator 500 from right to left as the drum rotates, so that the reinforcement is applied over the first rubber layer 810. Preferably, the reinforcement is spirally wound over the first rubber layer 810. The reinforcement is pressed into the first rubber layer 810 by the stitcher roller 540. The strip forming apparatus 100 is able to be in close proximity to the reinforcement applicator in a side by side manner. Thus, in a third step, the strip forming apparatus 100 may continuously wind a strip of rubber over the first reinforcement layer 820 while the reinforcement applicator is applying the first reinforcement layer.

These steps one through three may be repeated in order to build a shear band having the desired number of rubber and reinforcement layers. In a second embodiment of a shearband, there are at least two layers of rubber between the reinforcement layer. The shearband may include 3 layers of spirally wound reinforcements separated from each other by two layers of rubber, for a total of 6 layers of rubber. An additional 3 layers of rubber is added for the tread layer. After the shearband is formed on the drum, the drum may be slid on rails and inserted into mold. The mold segments are moved radially inwards about the shearband, and the mold segments are heated to the desired temperature to cure the shearband.

### Method of Forming a Tread Structure

The reinforcement applicator 500 and the strip applicator 100 may be used in conjunction with conventional tire building drums. In one embodiment, the reinforcement applicator 500 may be used to form belts directly onto a shaped toroidal carcass that is mounted on a tire building drum. The reinforcement applicator may form one or more zigzag belts. The strip applicator may be used to spirally wind a strip of rubber directly onto the carcass to form a tread.

### Retread

In this embodiment, a spliceless tread is built onto the drum 610, and is useful in retreading operations. The strip forming apparatus 100 is used to apply a continuous strip 800 of rubber onto the carcass to form one or more rubber layers. Typically, at least three layers of rubber is needed to form a tread ring. The tread ring is then inserted into mold 700 and then cured. The cured tread ring may then be mounted and then glued onto a buffed carcass as known to those skilled in the art of retreading of tires.

The advantages of the system are: Significant reductions in capital costs of a system vs extrusion. Significantly lower horsepower required (lower energy costs). Since the size of the system is small, multiple strips can be applied to the building drum simultaneously. This reduces capital cost and increases output because fewer drums and less conveying of building drums is required. Since the entire assembly is hanging vertically, stitching application pressures can be more easily achieved vs present extrusion technology. This leads to reduced trapped air and a higher quality product. Being able to control this stitching pressure also allows for reinforcement to be applied directly to the building drum without pre-calendering, further reducing complexity and costs.

## Claims

1. An apparatus for forming a reinforced rubber component, the apparatus comprising:
a support frame (630);
a rotatable drum (610) mounted upon the support frame (630);
a rubber strip forming apparatus (100) mounted in proximity to the rotatable drum (610) for applying a rubber strip onto the rotatable drum (610); and
a reinforcement applier apparatus (500) for applying a reinforcement onto the rotatable drum (610), **characterized in that** the angle of the reinforcement applier apparatus (500) with the vertical axis is adjustable and/or wherein the angle of the strip forming apparatus (100) with the vertical axis is adjustable.

2. The apparatus of claim 1 wherein an upper end of the rubber strip forming apparatus (100) is mounted on a rail and capable of translating in a direction parallel to a rotational axis of the rotatable drum (610).

3. The apparatus of claim 1 or 2 wherein an upper end of the reinforcement applier apparatus (500) is mounted on a rail and capable of translating in a direction parallel to a rotational axis of the rotatable drum (610).

4. The apparatus of at least one of the previous claims wherein the reinforcement applier apparatus (500) and the rubber strip forming apparatus (100) are located adjacent each other.

5. The apparatus of at least one of the previous claims wherein the rubber strip forming apparatus (100) comprises:
a support frame (110);
at least a first and a second roller (160, 170) mounted on the support frame (110), wherein the first and second rollers are spaced apart from each other; and
an application roller (230) located adjacent a milltruder head (220, 400) and a channel (240) formed in a space between the milltruder head (220, 400) and an outer surface of the application roller (230), wherein the channel (240) has an inlet and an outlet, wherein the inlet is located in proximity to the second roller (170), and wherein the outlet is located adjacent a die (250).

6. The apparatus of at least one of the previous claims wherein the support frame (630) is rotatable and/or wherein the support frame (630) is translatable in a direction parallel to the rotational axis of the rotatable drum (610).

7. A method of forming a reinforced rubber component, the method comprising the steps of:
providing an apparatus according to any of the preceding claims;
applying a rubber strip onto the rotatable drum (610) to form a first rubber layer (810) in a first direction;
applying a reinforcement over the first rubber layer (820) in a second direction opposite to the first direction to form a first reinforcement layer (820); and
applying a rubber strip over the first reinforcement layer (820), wherein the rubber strip and the reinforcement is spirally wound on the rotating drum (610).

8. The method of claim 7 wherein the reinforcement and the rubber strip is applied on the rotatable drum (610) at the same time.

9. The method of at least one of the claims 7 or 8 wherein the reinforcement is applied to the rotating drum (610) by a reinforcement applier (500) and the rubber strip is applied to the rotating drum (610) by a rubber strip applier (100), and wherein the reinforcement applier (500) and the rubber strip applier (100) are located adjacent each other.

10. The method of at least one of the claims 7 to 9 wherein the reinforced rubber component is a shear band.

11. The method of at least one of the claims 7 to 9 wherein the reinforced rubber component is a belt and tread assembly.

## Patentansprüche

1. Vorrichtung zum Ausbilden einer verstärkten Kautschukkomponente, wobei die Vorrichtung Folgendes umfasst:
einen Stützrahmen (630);
eine drehbare Trommel (610), die an dem Stützrahmen (630) montiert ist;
eine Kautschukstreifenausbildungsvorrichtung (100), die in der Nähe der drehbaren Trommel (610) zum Anbringen eines Kautschukstreifens auf die drehbare Trommel (610) montiert ist; und
eine Verstärkungsanbringervorrichtung (500) zum Anbringen einer Verstärkung auf die drehbare Trommel (610), **dadurch gekennzeichnet, dass** der Winkel der Verstärkungsanbringervorrichtung (500) mit der vertikalen Achse einstellbar ist und/oder wobei der Winkel der Streifenausbildungsvorrichtung (100) mit der vertikalen Achse einstellbar ist.

2. Vorrichtung nach Anspruch 1, wobei ein oberes Ende der
Kautschukstreifenausbildungsvorrichtung (100) auf einer Schiene montiert ist und in einer Richtung zu einer Drehachse der drehbaren Trommel (610) parallel verschoben werden kann.

3. Vorrichtung nach Anspruch 1 oder 2, wobei ein oberes Ende der
Verstärkungsanbringervorrichtung (500) auf einer Schiene montiert ist und in einer Richtung zu einer Drehachse der drehbaren Trommel (610) parallel verschoben werden kann.

4. Vorrichtung nach wenigstens einem der vorhergehenden Ansprüche, wobei sich die Verstärkungsanbringervorrichtung (500) und die Kautschukstreifenausbildungsvorrichtung (100) angrenzend zueinander befinden.

5. Vorrichtung nach wenigstens einem der vorhergehenden Ansprüche, wobei die Kautschukstreifenausbildungsvorrichtung (100) Folgendes umfasst:
einen Stützrahmen (110);
wenigstens eine erste und eine zweite Walze (160, 170), die auf dem Stützrahmen (110) montiert sind, wobei die erste und die zweite Walze voneinander beabstandet sind; und
eine Anbringungswalze (230), die sich angrenzend zu einem Milltruderkopf (220, 400) und einem Kanal (240) befindet, der in einem Raum zwischen dem Milltruderkopf (220, 400) und einer Außenoberfläche der Anbringungswalze (230) ausgebildet ist, wobei der Kanal (240) einen Einlass und einen Auslass aufweist, wobei sich der Einlass in der Nähe der zweiten Walze (170) befindet, und wobei sich der Auslass angrenzend zu einer Matrize (250) befindet.

6. Vorrichtung nach wenigstens einem der vorhergehenden Ansprüche, wobei der Stützrahmen (630) drehbar ist und/oder wobei der Stützrahmen (630) in einer Richtung zu der Drehachse der drehbaren Trommel (610) parallel verschiebbar ist.

7. Verfahren zum Ausbilden einer verstärkten Kautschukkomponente, wobei das Verfahren die folgenden Schritte umfasst:
Bereitstellen einer Vorrichtung nach einem der vorhergehenden Ansprüche;
Anbringen eines Kautschukstreifens auf die drehbare Trommel (610), um eine erste Kautschukschicht (810) in einer ersten Richtung auszubilden;
Anbringen einer Verstärkung über die erste Kautschukschicht (820) in einer zweiten Richtung entgegengesetzt zu der ersten Richtung, um eine erste Verstärkungsschicht (820) auszubilden; und
Anbringen eines Kautschukstreifens über die erste Verstärkungsschicht (820), wobei der Kautschukstreifen und die Verstärkung auf die drehende Trommel (610) spiralförmig gewickelt sind.

8. Verfahren nach Anspruch 7, wobei die Verstärkung und der Kautschukstreifen gleichzeitig auf die drehbare Trommel (610) angebracht werden.

9. Verfahren nach wenigstens einem der Ansprüche 7 oder 8, wobei die Verstärkung von einem Verstärkungsanbringer (500) auf die drehende Trommel (610) angebracht wird und der Kautschukstreifen von einem Kautschukstreifenanbringer (100) auf die drehende Trommel (610) angebracht wird, und wobei sich der Verstärkungsanbringer (500) und der Kautschukstreifenanbringer (100) angrenzend zueinander befinden.

10. Verfahren nach wenigstens einem der Ansprüche 7 bis 9, wobei die verstärkte Kautschukkomponente ein Scherband ist.

11. Verfahren nach wenigstens einem der Ansprüche 7 bis 9, wobei die verstärkte Kautschukkomponente eine Riemen- und Laufflächenanordnung ist.

## Revendications

1. Appareil destiné à la formation d'un composant de caoutchouc renforcé, l'appareil comprenant :
un cadre de support (630) ;
un tambour rotatif (610) monté sur le cadre de support (630) ;
un appareil (100) faisant office de dispositif destiné à la formation d'une bande de caoutchouc monté à proximité du tambour rotatif (610) destiné à appliquer une bande de caoutchoucs sur le tambour rotatif (610) ; et
un appareil (500) faisant office de dispositif destiné à l'application d'un renforcement, destiné à appliquer un renforcement sur le tambour rotatif (610) ; **caractérisé en ce que** l'angle formé par l'appareil faisant office de dispositif d'application d'un renforcement avec l'axe vertical peut être réglé ; et/ou dans lequel l'angle formé par l'appareil (100) faisant office de dispositif destiné à la formation d'une bande avec l'axe vertical peut être réglé.

2. Appareil selon la revendication 1, dans lequel une extrémité supérieure de l'appareil (100) faisant office de dispositif destiné à la formation d'une bande de caoutchouc est montée sur un rail et est capable d'effectuer un mouvement de translation dans une direction qui est parallèle à un axe de rotation du tambour rotatif (610).

3. Appareil selon la revendication 1 ou 2, dans lequel une extrémité supérieure de l'appareil (500) faisant office de dispositif destiné à l'application d'un renforcement est montée sur un rail et est capable d'effectuer un mouvement de translation dans une direction qui est parallèle à un axe de rotation du tambour rotatif (610).

4. Appareil selon au moins une des revendications précédentes, dans lequel l'appareil (500) faisant office de dispositif destiné à l'application d'un renforcement et l'appareil (100) faisant office de dispositif destiné à la formation d'une bande de caoutchouc sont disposés dans une position adjacente l'un par rapport à l'autre.

5. Appareil selon au moins une des revendications précédentes, dans lequel l'appareil (100) faisant office de dispositif destiné à la formation d'une bande de caoutchouc comprend :
un cadre de support (110) ;
au moins un premier et un deuxième galet (160, 170) montés sur le cadre de support (110) ; dans lequel le premier et le deuxième galet sont espacés l'un de l'autre ; et
un rouleau d'application (230) qui est disposé dans une position adjacente à une tête d'un dispositif faisant office de broyeuse/extrudeuse (220, 400) et un canal (240) formé dans un espace ménagé entre la tête du dispositif faisant office de broyeuse/extrudeuse (220, 400) et une surface externe du rouleau d'application (230) ; dans lequel le canal (240) possède une entrée et une sortie ; dans lequel l'entrée est située à proximité du deuxième galet (170) ; et dans lequel la sortie est disposée dans une position adjacente à une matrice (250).

6. Appareil selon au moins une des revendications précédentes, dans lequel le cadre de support (630) est rotatif et/ou dans lequel le cadre de support (630) est capable d'effectuer un mouvement de translation dans une direction qui est parallèle à l'axe de rotation du tambour rotatif (610).

7. Procédé destiné à la formation d'un composant de caoutchouc renforcé, le procédé comprenant les étapes dans lesquelles :
on procure un appareil selon l'une quelconque des revendications précédentes ;
on applique une bande de caoutchouc sur le tambour rotatif (610) afin d'obtenir une première couche de caoutchouc (810), dans une première direction ;
on applique un renforcement par-dessus la première couche de caoutchouc (820) dans une deuxième direction qui est opposée à la première direction afin d'obtenir une première couche de renforcement (820) ; et
on applique une bande de caoutchouc par-dessus la première couche de renforcement (820) ; dans lequel on enroule en spirale la bande de caoutchouc et le renforcement sur le tambour rotatif (610).

8. Procédé selon la revendication 7, dans lequel on applique le renforcement et la bande de caoutchouc sur le tambour rotatif (610) d'une manière simultanée.

9. Procédé selon au moins une des revendications 7 ou 8, dans lequel on applique le renforcement sur le tambour rotatif (610) par l'intermédiaire d'un appareil (500) faisant office de dispositif destiné à l'application d'un renforcement et on applique la bande de caoutchouc sur le tambour rotatif (610) par l'intermédiaire d'un appareil (100) faisant office de dispositif destiné à la formation d'une bande de caoutchouc ; et dans lequel l'appareil (500) faisant office de dispositif destiné à l'application d'un renforcement et l'appareil (100) faisant office de dispositif destiné à la formation d'une bande de caoutchouc sont disposés dans une position adjacente l'un par rapport à l'autre.

10. Procédé selon au moins une des revendications 7 à 9, dans lequel le composant de caoutchouc renforcé représente une bande qui résiste au déchirement.

11. Procédé selon au moins une des revendications 7 à 9, dans lequel le composant de caoutchouc renforcé représente un assemblage de ceinture et de bande de roulement.
